# EUROPÄISCHE PATENTSCHRIFT

(11) **EP 0 458 221 B1**
(45) Veröffentlichungstag und Bekanntmachung des Hinweises auf die Patenterteilung: **10.08.1994**
(21) Anmeldenummer: 91108066.1
(22) Anmeldetag: 17.05.1991
(51) Int. Cl.: C02F 11/12

(54) **Verfahren zum Trocknen von Klärschlamm**
Process for drying sludge
Procédé de séchage de boues de décantation

(30) Priorität: 18.05.1990 DE 4016100
(43) Veröffentlichungstag der Anmeldung: 27.11.1991
(73) Patentinhaber: Weiss Bio Anlagen GmbH, D-35684 Dillenburg (DE)
(72) Erfinder: Greeb, Herbert, W-6340 Dillenburg 2 (DE)
(74) Vertreter: Patentanwälte Leinweber & Zimmermann

(56) Entgegenhaltungen:
- EP-A- 0 293 976
- DE-A- 2 101 369
- GB-A- 835 216
- GB-A- 2 089 667
- US-A- 3 805 715

## Beschreibung

Die Erfindung betrifft ein Verfahren zum Trocknen von Klärschlamm, bei dem der Klärschlamm in einem Behälter von unten mit Trocknungsluft durchströmt wird.

In der Vergangenheit wurde der bei Klärwerken in beträchtlichen Mengen anfallende Klärschlamm auf einfache Weise entsorgt, hauptsächlich nämlich indem dieser auf landwirtschaftlichen Nutzungsflächen verteilt wurde mit der Absicht, dadurch die Flächen zu düngen. Allerdings weist der ungetrocknete Klärschlamm einen verhältnismäßig hohen Feuchtigkeitsanteil auf, so daß hierbei ein Transport von hohen Volumina und Gewichten erforderlich ist. Der weitere Umstand, daß mit dem Klärschlamm dem Boden nicht nur große Mengen von Nitraten, sondern auch Schwermetalle, chlorierte und sonstige Kohlenwasserstoffe und andere schädliche Substanzen zugeführt werden, die nicht nur in die oberen Schichten des Bodens gelangen und damit dem Ertrag der Landwirtschaft dienen, sondern auch das Grundwasser belasten, hat nun jedoch dazu geführt, daß das Ausbringen von Klärschlamm auf landwirtschaftlichen oder anderen Flächen nur noch zurückhaltend in Betracht gezogen wird.

Die Hauptalternative dazu besteht in der Ablagerung des Klärschlamms auf Deponien, wobei jedoch der hohe Wassergehalt des Klärschlamms und der erforderliche große Deponieraum ebenfalls hinderlich ist.

Zur Verminderung des Wassergehaltes und damit auch des erforderlichen Deponieraums für den Klärschlamm sind bereits Verfahren bekannt (DE-A1-35 31 748), nach denen der zunächst maschinell mittels Filterpressen oder Zentrifugen entwässerte Klärschlamm in Trocknungsbehälter gefüllt wird, die einen mit einer Vielzahl von Öffnungen versehenen Belüftungsboden zur Durchlüftung des darüber befindlichen Klärschlamms aufweisen, um diesen durch Abgabe der Feuchtigkeit des Klärschlamms an die hindurchströmende Luft zu trocknen. Nach dem Trocknen und der damit verbundenen Volumenverminderung des Klärschlamms kann dieser dem Behälter entnommen und deponiert werden, worauf der Behälter zur neuerlichen Befüllung mit Klärschlamm und zur Wiederholung dieses Vorgangs zur Verfügung steht. Der Nachteil dieses zyklischen, diskontinuierlichen Ablaufes besteht darin, daß einerseits eine verhältnismäßig große Anzahl von Behältern vorgehalten werden müssen, um den kontinuierlich anfallenden Klärschlamm weiterverarbeiten zu können, und zum anderen darin, daß ständig große Mengen von feuchtem und getrocknetem Klärschlamm zu und von den einzelnen Behältern verschoben werden müssen. Die bekannte Verfahrensweise ist somit sehr arbeitsintensiv und kann nur mit erheblichem Aufwand automatisiert werden. Ein weiterer Nachteil besteht darin, daß in jedem der Behälter in Abhängigkeit vom Trocknungsgrad des Klärschlamms ständig wechselnde Bedingungen vorliegen, was zum einen schon für den einzelnen Behälter verhältnismäßig aufwendige Regelungseinrichtungen notwendig macht und zum anderen bedeutet, daß für jeden der Behälter eigene derartige Regelungseinrichtungen notwendig sind.

Die Aufgabe der Erfindung besteht somit darin, ein Verfahren zum Trocknen von Klärschlamm anzugeben, bei dem der Klärschlamm unter quasi stationären Bedingungen getrocknet wird.

Diese Aufgabe wird gemäß der vorliegenden Erfindung dadurch gelöst, daß der feuchte Klärschlamm dem Behälter an dessen Oberseite kontinuierlich oder intermittierend zugeführt wird, der Klärschlamm in Form einer Säule mit stabiler Schichtung von oben nach unten durch den Behälter geführt wird, der getrocknete Klärschlamm dem Behälter von der Unterseite der Klärschlammsäule kontinuierlich oder intermittierend entnommen wird, und die Trocknungsluft im Gegenstrom von unten nach oben durch die Klärschlammsäule geführt wird.

Gemäß einer besonders vorteilhaften Weiterbildung des Verfahrens ist es vorgesehen, daß der dem Behälter von der Unterseite der Klärschlammsäule entnommene Klärschlamm einem weiteren, von seiner Unterseite her mit Trocknungsluft durchströmten Behälter an dessen Oberseite kontinuierlich oder intermittierend zugeführt, in Form einer Säule mit stabiler Schichtung von oben nach unten durch den weiteren Behälter geführt und dabei einer weiteren Trocknung unterzogen und dem weiteren Behälter von der Unterseite der Klärschlammsäule kontinuierlich oder intermittierend entnommen wird, wobei die Trocknungsluft im Gegenstrom von unten nach oben durch die Klärschlammsäule in dem weiteren Behälter geführt wird, und daß zumindest ein Teil der dem einen Behälter an seiner Oberseite entnommenen Trocknungsluft zumindest als ein Teil der Trocknungsluft dem anderen Behälter an dessen Unterseite zugeführt wird.

Ein Vorteil dieser Weiterbildung des erfindungsgemäßen Verfahrens besteht darin, daß durch die nochmalige Verwendung der von dem einen Behälter abgeführten Trocknungsluft als dem anderen Behälter zuzuführende Trocknungsluft eine beträchtliche Energieeinsparung erreicht wird. Ein anderer Vorteil besteht darin, daß durch die Aufteilung des zu trocknenden Klärschlammvolumens auf zwei Behälter eine Entkopplung bezüglich Wandergeschwindigkeit der Klärschlammsäulen und Durchsatzgeschwindigkeit der Trocknungsluft vorgenommen werden kann, wodurch zwei jeweils einzeln optimierbare Teilprozesse durchgeführt werden können.

Gemäß einer Weiterbildung dieses Verfahrens wird die dem einen Behälter entnommene Trocknungsluft vor der Zuführung zum anderen Behälter entfeuchtet. Dadurch kann die Feuchte der dem anderen Behälter zugeführten Trocknungsluft unabhängig von der Feuchte der dem einen Behälter abgeführten Trocknungsluft eingestellt werden.

Gemäß einer Weiterbildung des Verfahrens wird die dem einen Behälter an dessen Oberseite entnommene Trocknungsluft dem anderen Behälter an dessen Unterseite zugeführt. Dies bedeutet, daß die Trocknungsluft bezüglich den Klärschlammsäulen in den beiden Behältern jeweils im Gegenstrom, bezüglich des von dem einen Behälter zu dem anderen Behälter überführten Klärschlamms jedoch im Gleichstrom geführt wird. Somit werden der Energieinhalt und die Feuchte der Trocknungsluft von dem ersten Behälter auf den Zweiten Behälter überführt, so daß sich in diesem eine vergleichsweise hohe Temperatur bei vergleichsweise hoher Feuchte, gleichzeitig jedoch verhältnismäßig niedrigem Sauerstoffgehalt einstellt, da der bei biologischen Umsetzungsprozessen in dem einen Trocknungsbehälter aus der Trocknungsluft entzogene Luftsauerstoff nun fehlt.

Gemäß einer dazu alternativen Weiterbildung des Verfahrens wird die dem anderen Behälter an dessen Oberseite entnommene Trocknungsluft dem einen Behälter an dessen Unterseite zugeführt. Dies bedeutet, daß die Trocknungsluft sowohl bezüglich den jeweiligen Klärschlammsäulen in den beiden Behältern als auch bezüglich dem von dem einen Behälter zu dem anderen Behälter überführten Klärschlamm im Gegenstrom geführt wird. Somit wird der Energieinhalt und die Feuchte der von dem anderen Behälter abgeführten Trocknungsluft zu dem einen Behälter übergeführt, so daß sich dort eine vergleichsweise hohe Temperatur bei vergleichsweise hoher Feuchte einstellt, der Sauerstoffgehalt jedoch um den durch biologische Prozesse in dem weiteren Behälter entzogenen Luftsauerstoff niedriger ist.

Gemäß einer Weiterbildung kann es vorgesehen sein, jeweils dem Behälter, dem die Trocknungsluft zuletzt zugeführt wird, zusätzlich Trocknungsluft aus der Umgebung zuzuführen. Dadurch ist es möglich, in diesem Behälter den Sauerstoffgehalt, die Feuchte und die Temperatur der Trocknungsluft in weiten Grenzen zu bestimmen.

Andere Weiterbildungen des erfindungsgemäßen Verfahrens sind in den Unteransprüchen angegeben.

Das erfindungsgemäße Verfahren läßt sich mit einer verhältnismäßig einfach aufgebauten Einrichtung durchführen. Bei letzterer ist beispielsweise der zur Aufnahme des Klärschlamms dienende Behälter mit einem eine Vielzahl von Öffnungen zur Durchlüftung des darüber befindlichen Klärschlamms aufweisenden Belüftungsboden versehen. Ferner ist eine Belüftungseinrichtung zur Zuführung der Trocknungsluft an den Belüftungsboden und eine mit der Oberseite des Behälters in Verbindung stehende Luftabführungseinrichtung vorgesehen, mit der die durch den Belüftungsboden eintretende Luft nach dem Durchströmen des Klärschlamms von dessen Oberseite abgeführt wird. Schließlich wird dabei der feuchte Klärschlamm dem Behälter an dessen Oberseite durch eine Beschickungseinrichtung zugeführt und der getrocknete Klärschlamm von der Unterseite des Behälters durch eine Austrageinrichtung abgeführt.

Bei der Erfindung werden in einem kontinuierlichen Verarbeitungsvorgang hohe Trocknungsgrade des Klärschlamms erreicht. Das Verfahren und die zu seiner Durchführung dienende Vorrichtung arbeiten dabei besonders energiesparend, da die entstehende Eigenwärme zum Trocknen ausgenutzt werden kann. Der Durchlauf der Klärschlammsäule erfolgt unter der Wirkung der Schwerkraft, so daß insoweit keine zusätzliche Förderenergie aufgewendet werden muß.

Im folgenden werden Ausführungsbeispiele der Erfindung anhand der Zeichnung erläutert.

Dabei zeigen:
- Fig. 1: das grundsätzliche Ablaufschema des erfindungsgemäßen Verfahrens zum Trocknen von Klärschlamm in Form eines Blockdiagramms;
- Fig. 2: eine teilweise geschnittene Seitenansicht einer Einrichtung zum Trocknen von Klärschlamm gemäß einem ersten Ausführungsbeispiel der Erfindung; und
- Fig. 3: eine teilweise geschnittene Seitenansicht einer Einrichtung zum Trocknen von Klärschlamm gemäß einem zweiten Ausführungsbeispiel der Erfindung.

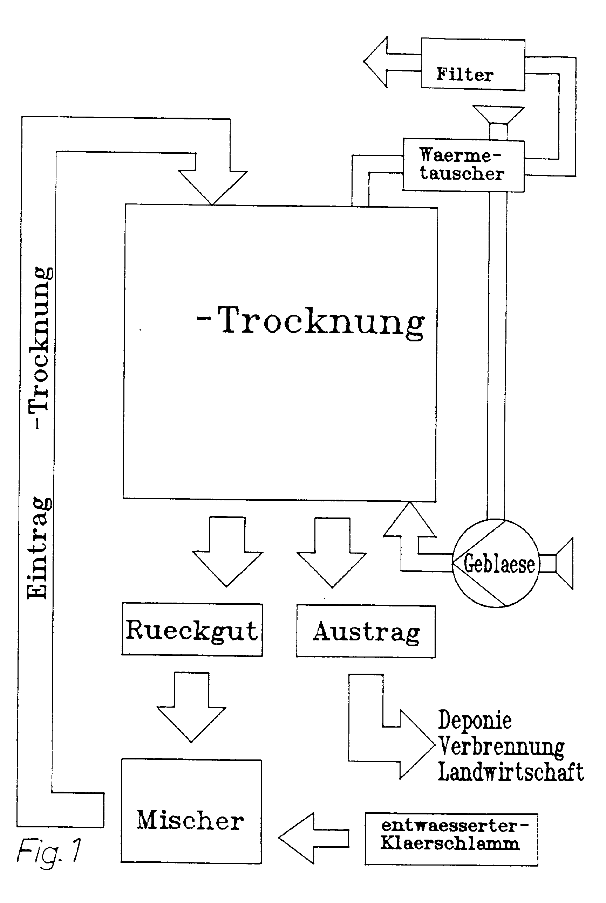

Wie Fig. 1 zeigt, wird der zunächst mit mechanischen Mitteln, beispielsweise einer Filterpresse, einer Siebbandpresse oder einer Zentrifuge, auf einen Trockensubstanzgehalt von etwa 20 bis 30 % vorentwässerte Klärschlamm einem Mischer zugeführt und über den mit "Eintrag Trocknung" bezeichneten Weg dem eigentlichen Trocknungsvorgang zugeführt. Die Trocknung erfolgt in einem Behälter, in welchem der Klärschlamm von unten mit Trocknungsluft durchströmt wird, die von außen mittels eines Gebläses zugeführt wird. Gemäß der vorliegenden Erfindung wird der Klärschlamm dem Behälter an dessen Oberseite kontinuierlich oder intermittierend zugeführt und in dem Behälter in Form einer Klärschlammsäule mit stabiler Schichtung von oben nach unten geführt und dann von der Unterseite der Klärschlammsäule wiederum kontinuierlich oder intermittierend entnommen, wobei diese langsam von oben nach unten durch den Behälter wandernde Klärschlammsäule im Gegenstrom von unten nach oben von der Trocknungsluft durchströmt wird.

Der von der Unterseite des Behälters entnommene getrocknete Klärschlamm wird über den mit "Austrag" bezeichneten Weg der Deponie zur Ablagerung zugeführt. Alternativ kann der getrocknete Klärschlamm auch durch Verbrennung entsorgt oder unter bestimmten Bedingungen in der Landwirtschaft verwendet werden. Der getrocknete Klärschlamm weist einen Trockensubstanzgehalt von etwa 60 bis 80 % auf, was einer Volumenverminderung um 50 bis 65 % gegenüber dem maschinell vorentwässerten Klärschlamm auf der Eintragseite entspricht.

Ein Teil des dem Behälter entnommenen Klärschlamms kann über den mit "Rückgut" bezeichneten Weg in dem schon oben erwähnten Mischer dem maschinell vorentwässerten Klärschlamm beigemengt werden, um die Anfangskonsistenz und den Anfangstrockensubstanzgehalt einzustellen. Je nach Bedingungen kann dabei bis rund die Hälfte des dem Behälter entnommenen getrockneten Klärschlamms dem feuchten Klärschlamm auf der Eintragseite zugemischt werden.

Die Geschwindigkeit, mit der der feuchte Klärschlamm dem Behälter zugeführt wird, und die Geschwindigkeit, mit der der getrocknete Klärschlamm aus dem Behälter entnommen wird, wird so eingestellt, daß jedes Klärschlammteilchen den Behälter innerhalb einer Zeitspanne von rund 5 bis 15 Tagen durchläuft bzw. für diese Zeit in dem Behälter verbleibt. Von Vorteil hat es sich erwiesen, daß der Klärschlamm den Behälter innerhalb von 7 bis 10 Tagen durchläuft.

Damit die Trocknung in der genannten Zeit und unter optimalen Bedingungen abläuft, sollte der in dem Behälter befindliche Klärschlamm eine verhältnismäßig hohe Temperatur haben, nämlich etwa im Bereich von 60° C bis 85° C, wobei sich eine Temperatur von rund 80° C als besonders vorteilhaft erwiesen hat. Besonders gute Verhältnisse werden erreicht, wenn die gesamte in dem Behälter befindliche Klärschlammsäule eine im wesentlichen einheitliche Temperatur der genannten Höhe aufweist. Um dieses zu erreichen, ist es somit notwendig, die dem Behälter an seiner Unterseite zugeführte Trocknungsluft auf eine gegenüber der Umgebungstemperatur erhöhte Temperatur, beispielsweise auf 60° C, vorzuerwärmen. Dies kann durch eine getrennte Heizeinrichtung geschehen, als besonders wirtschaftlich erweist es sich jedoch, die von der Oberseite des Behälters abgeführte, mit der dem Klärschlamm bei der Trocknung entzogenen Feuchtigkeit beladene und erwärmte Luft durch einen Wärmetauscher zu führen, über den der größte Teil der in sensibler und latenter Form vorliegenden Wärme an die dem Behälter zuzuführende Luft übertragen wird. Naturgemäß liegt dabei der größte Teil der Wärme in latenter Form vor, die beim Kondensieren der in der abgeführten Luft enthaltenen Feuchtigkeit frei wird. Im weiteren Weg der Abluft ist dem Wärmetauscher ein Filter nachgeschaltet, das in erster Linie dazu dient, in der Abluft enthaltene Geruchsstoffe von der Umgebung fernzuhalten.

Durch die erhöhte Temperatur in dem Behälter wird ein Restfäulungsprozeß eingeleitet, bei dem weitere Wärme frei wird. Unter bestimmten Bedingungen kann die freigesetzte Wärmemenge so groß sein, daß die genannten Temperaturen allein durch die über den Wärmetauscher rückgeführte Wärme aufrechterhalten werden können, so daß auf eine äußere Heizquelle verzichtet werden kann, so daß der einzige Energiebedarf für die Trocknung des Klärschlamms in der mechanischen Energie für die Zuführung und Abführung der Trocknungsluft besteht.

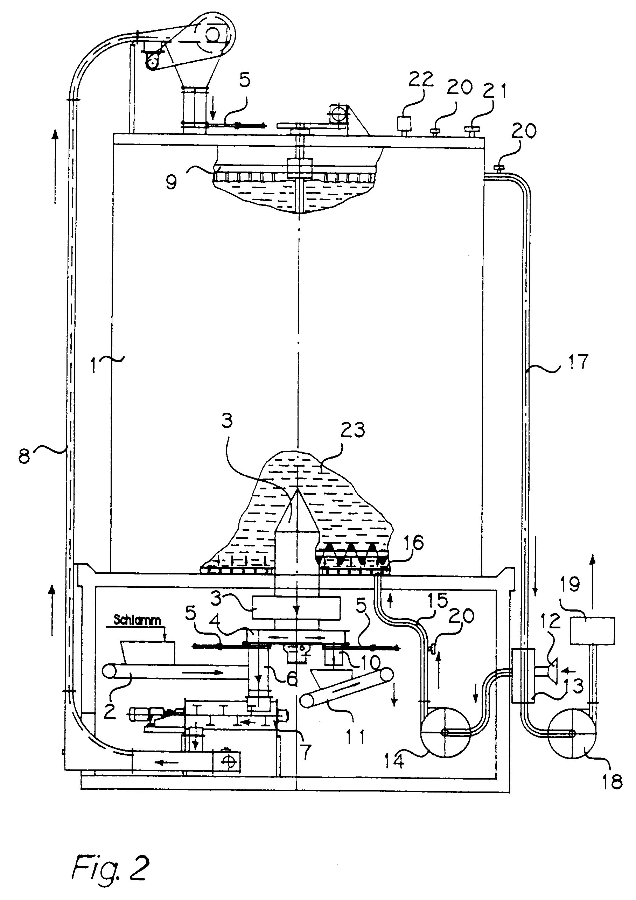

Bei dem in Fig. 2 gezeigten Ausführungsbeispiel des erfindungsgemäßen verfahrens zum Trocknen von Klärschlamm hat ein Behälter 1 zur Aufnahme des Klärschlamms einen kreisförmigen Querschnitt, was sowohl im Hinblick auf die Herstellung und die mechanische Festigkeit des Behälters als auch im Hinblick auf die Ausbildung von Beschickungs- und Austrageinrichtungen für den Klärschlamm von besonderem Vorteil ist. An der Unterseite ist der Behälter 1 durch einen Belüftungsboden 16 begrenzt, der mit einer Vielzahl von Öffnungen für den Eintritt der Trocknungsluft in den darüber befindlichen Klärschlamm versehen ist. Insbesondere besteht der Belüftungsboden 16 in einem Sieb oder in einer Siebplatte, deren Öffnungen so bemessen sind, daß ein Durchtritt der Teilchen des an dieser Stelle bereits getrocknet vorliegenden Klärschlamms praktisch nicht möglich ist.

Der mechanisch vorentwässerte Schlamm wird über eine Beschickungseinrichtung dem Behälter an seiner Oberseite zugeführt. Die Beschickungseinrichtung besteht bei dem gezeigten Ausführungsbeispiel in einem Trogkettenförderer 2, einem in Förderrichtung diesem nachfolgenden Fallstutzen 6 und einem Beschickungsförderer 8, der den zugeführten Schlamm an die Oberseite des Behälters liefert. Zwischen den Fallstutzen 6 und den Einlaß des Beschickungsförderers 8 ist eine Mischeinrichtung 7 geschaltet, in der dem von außen über den Trogkettenförderer 2 zugeführten feuchten Klärschlamm ein Teil des an der Unterseite des Behälters 1 entnommenen getrockneten Klärschlamms beigemengt werden kann.

Der getrocknete Klärschlamm wird von der Unterseite des Behälters mittels einer Austrageinrichtung 3 entnommen, die mindestens einen über dem Belüftungsboden 16 um die Behälterachse umlaufenden Fräsarm enthält. Bei dem gezeigten Ausführungsbeispiel ist der Fräsarm als eine um seine Längsachse drehbare Förderschnecke ausgebildet, so daß durch eine kombinierte Bewegung bestehend aus der Drehung des Fräsarms um die Behälterachse und der Drehung um seine eigene Längsachse von der Unterseite der in dem Behälter geschichteten Klärschlammsäule eine Schicht gleichmäßiger Dicke entfernt wird. Über eine Verteilereinrichtung 4 wird der entnommene Klärschlamm einerseits über einen Entnahmestutzen 10 an eine Austragfördereinrichtung 11 abgegeben und andererseits an den Fallstutzen 6 für die Beimengung zum zugeführten feuchten Klärschlamm. Die Verteilung wird durch jeweils den Stutzen 6 und 10 vorgeschaltete Verschlußschieber 5 eingestellt. Ein ähnlicher Verschlußschieber 5 befindet sich auch an der Oberseite des Behälters 1 am Ende des Beschickungsförderers 8, um die Zufuhr von feuchtem Schlamm abzusperren.

Im oberen Bereich des Behälters 1 ist eine Verteilereinrichtung 9 vorgesehen, durch die der zugeführte feuchte Klärschlamm gleichmäßig auf die Oberseite der in dem Behälter 1 befindlichen Klärschlammsäule verteilt wird. Die Verteilereinrichtung 9 besteht hier in zwei oder mehreren um die Behälterachse umlaufenden Verteilerarmen.

Die Trocknungsluft wird dem Behälter 1 von der Unterseite des Belüftungsbodens 16 über eine Belüftungsleitung 15 zugeführt, in die die über einen Ansaugstutzen 12 von außen angesaugte Luft mittels eines Gebläses 14 gepreßt wird. Nach dem Durchströmen des Klärschlamms wird die erwärmte und mit der dem Klärschlamm bei der Trocknung entzogenen Feuchtigkeit beladene Luft von der Oberseite des Behälters über eine Abluftleitung 17 abgeführt, indem in dieser mittels eines Gebläses 18 ein Unterdruck erzeugt wird. Zwischen dem Auslaß aus dem Behälter und dem Gebläse 18 ist ein Wärmetauscher 13 angeordnet, in dem die aus dem Behälter abgeführte warme und feuchte Luft ihre Wärme an die von außen zugeführte Trocknungsluft überträgt, indem sie abgekühlt und die enthaltene Feuchtigkeit kondensiert wird. Dem Gebläse 18 ist ein Filter 19 nachgeschaltet, das dazu dient, in der Abluft enthaltene Geruchsstoffe und Faulgase von der Umgebung abzuhalten.

An der Oberseite des Behälters befinden sich Meßeinrichtungen für die Temperatur (20), den O₂- und/oder CO₂-Gehalt (21) und den Füllstand im Behälter (22). Die von diesen Meßeinrichtungen erhaltenen Meßwerte werden zusammen mit Temperaturmeßwerten, die von weiteren Temperaturmeßeinrichtungen 20 am behälterseitigen Ende der Abluftleitung 17 und in der Zuluftleitung 15 geliefert werden, einer nicht näher dargestellten Steuereinrichtung zugeleitet, die den Durchsatz an Trocknungsluft durch den Behälter 1 und das Mischungsverhältnis bei der Beimengung in der Mischeinrichtung 7 optimal auf die Durchsatzmenge des Klärschlamms abstimmt.

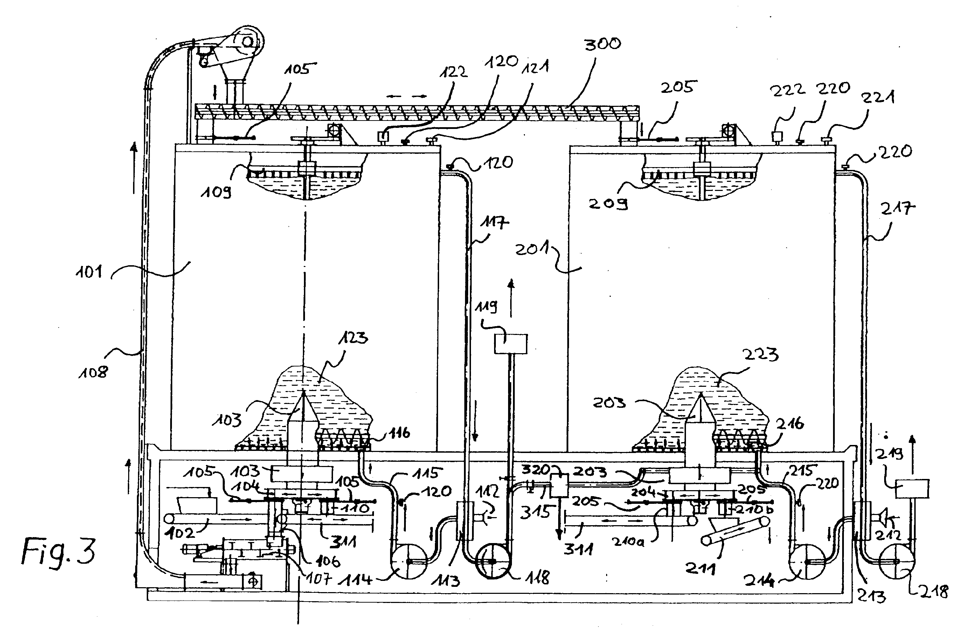

Bei dem in Fig. 3 dargestellten Ausführungsbeispiel der Erfindung sind zwei Behälter 101 und 201 vorgesehen, die jeweils der Aufnahme von zu trocknendem Klärschlamm in Form einer Klärschlammsäule 123 bzw. 223 dienen. Die beiden Behälter 101 und 201 und die diesen jeweils zugeordneten Einrichtungen sind im wesentlichen ähnlich aufgebaut wie bei dem in Fig. 2 gezeigten ersten Ausführungsbeispiel.

Jeder der Behälter 101, 201 ist an seiner Unterseite von einem Belüftungsboden 116 bzw. 216 begrenzt, der von seiner Unterseite her von Trocknungsluft durchströmt wird.

Ähnlich wie bei dem Ausführungsbeispiel gemäß Fig. 2 ist auch bei Fig. 3 ein Trogkettenförderer 102 zur Zuführung des bereits mechanisch vorentwässerten, zu trocknenden Klärschlamms vorgesehen. Dem Trogkettenförderer 102 ist ein Fallstutzen 106 nachgeschaltet, in den außerdem eine für beide Behälter 101 und 201 vorgesehene gemeinsame Austragfördereinrichtung 311 mündet. Von dem Fallstutzen 106 führt ein Beschickungsförderer 108 zur Oberseite der Einrichtung, wo ein ebenfalls für die beiden Behälter 101 und 201 gemeinsam vorgesehener Schneckenförderer 300 angeordnet ist, der den Klärschlamm von der Beschickungseinrichtung 108 aufnimmt. Der gemeinsame Schneckenförderer 300 mündet an seinem einen Ende über einen Fallstutzen an der Oberseite des ersten Behälters 101 und an seinem anderen Ende über einen Fallstutzen an der Oberseite des zweiten Behälters 201. Der gemeinsame Schneckenförderer 300 ist durch eine nicht näher dargestellte Antriebseinrichtung in beiden Richtungen antreibbar, so daß das über den Beschickungsförderer 108 nach oben geförderte Gut wahlweise in den ersten Behälter 101 oder in den zweiten Behälter 201 gefüllt werden kann.

Im oberen Bereich der Behälter 101 und 201 ist jeweils eine Verteilereinrichtung 109 bzw. 209 vorgesehen, durch die der Klärschlamm gleichmäßig auf die Oberseite der in den Behältern befindlichen Klärschlammsäulen verteilt wird, ähnlich wie es auch bei dem in Fig. 2 gezeigten ersten Ausführungsbeispiel der Fall ist.

Genauso ist an der Unterseite jedes der beiden Behälter 101 und 201 jeweils eine Austrageinrichtung 103 bzw. 203 vorgesehen, durch die der von der Unterseite der jeweiligen Klärschlammsäule entnommene Klärschlamm aus den Behältern austragbar ist. Am ersten Behälter 101 befindet sich eine Verteilereinrichtung 104, mittels der der entnommene Klärschlamm wahlweise über den Fallstutzen 106 dem Beschickungsförderer 108 oder über einen Entnahmestutzen 110 der gemeinsamen Austragfördereinrichtung 311 zuführbar ist.

Ähnlich ist auch unter dem zweiten Behälter 201 eine Verteilereinrichtung 204 vorgesehen, mittels der der entnommene Klärschlamm wahlweise über einen Entnahmestutzen 210a der gemeinsamen Austragfördereinrichtung 311 oder über einen Entnahmestutzen 210b einer Austragfördereinrichtung 211 zuführbar ist, die dazu dient, den getrockneten Klärschlamm zur Abgabe nach außen zur Verfügung zu stellen. Sowohl an der Oberseite der beiden Behälter 101 und 201 als auch an den Verteilereinrichtungen 104 bzw. 204 sind jeweils eine Anzahl von Verschlußschiebern 105 bzw. 205 entsprechend den Verschlußschiebern 5 bei dem in Fig. 2 gezeigten ersten Ausführungsbeispiel zum Unterbrechen der Förderströme vorgesehen.

Dem ersten Behälter 101 wird von der Unterseite des Belüftungsbodens 116 über eine Belüftungsleitung 115 und mittels eines Gebläses 114 und eines Ansaugstutzens 112 von außen Trocknungsluft zugeführt. Nach dem Durchströmen der in dem ersten Behälter 101 befindlichen Klärschlammsäule wird die darin erwärmte und mit der dem Klärschlamm bei der Trocknung entzogenen Feuchtigkeit beladene Luft von der Oberseite des Behälters über eine Abluftleitung 117 abgeführt, indem in dieser mittels eines Gebläses 118 ein Unterdruck erzeugt wird. In der Abluftleitung 117 ist ein Wärmetauscher 113 angeordnet, in dem die aus dem Behälter abgeführte Luft einen Teil ihrer Wärme an die von außen zugeführte Trocknungsluft und einen Teil ihrer Feuchtigkeit durch Kondensation abgeben kann. Von dem Gebläse 118 führt eine mittels eines Ventils absperrbare Leitung zu einem Filter 119, der dazu dient, in der Abluft enthaltene Geruchsstoffe und Faulgase von der Umgebung abzuhalten, wenn Abluft direkt von dem Gebläse 118 an die Umgebung abgegeben werden soll.

Weiter führt von dem Gebläse 118 eine mittels eines Ventils absperrbare Verbindungsleitung 315 zur Unterseite des Belüftungsbodens 216 des zweiten Behälters 201, so daß die von der Oberseite des ersten Behälters 101 abgeführte Abluft der Unterseite des zweiten Behälters 201 zugeführt werden kann. In der Verbindungsleitung 315 ist eine Entfeuchtungseinrichtung 320 vorgesehen, die dazu dient, dieser Abluft einen Teil ihrer Feuchtigkeit zu entziehen.

Außerdem ist eine Belüftungsleitung 215 vorgesehen, über die mittels eines Gebläses 214 von einem Ansaugstutzen 212 zusätzlich von außen angesaugte Luft zur Unterseite des Belüftungsbodens 216 des zweiten Behälters 201 zugeführt werden kann. Diese von außen zugeführte Frischluft kann wahlweise mit der von der Oberseite des ersten Behälters 101 abgeführten Trocknungsluft gemischt und damit die Temperatur, die Feuchte und der Sauerstoffgehalt der die Klärschlammsäule 223 in dem zweiten Behälter 201 durchsetzenden Trocknungsluft in geeigneter Weise eingestellt werden.

Nach dem Durchströmen der Klärschlammsäule 223 in dem zweiten Behälter 201 wird die Trocknungsluft von der Oberseite über eine Abluftleitung 217 unter Förderung durch ein Gebläse 218 abgeführt und über ein Filter 219 an die Umgebung abgegeben, wobei das Filter 219 ebenso wie das Filter 119 dazu dient, in der Abluft enthaltene Geruchsstoffe und Faulgase von der Umgebung abzuhalten. Ebenso wie im Falle des ersten Behälters 101 ist in der Abluftleitung 217 ein Wärmetauscher 213 vorgesehen, an dem die Abluft ihren erhöhten Wärmeinhalt an die vom Gebläse 214 angesaugte Frischluft abgibt.

An der Oberseite der Behälter 101 und 201 sind jeweils Meßeinrichtungen für die Temperatur (120 bzw. 220), den O₂- und/oder CO₂-Gehalt (121 bzw. 221) und den Füllstand im Behälter (122 bzw. 222) vorgesehen. Die von diesen Meßeinrichtungen erhaltenen Meßwerte dienen dazu, zusammen mit Temperaturmeßwerten, die von weiteren Temperaturmeßeinrichtungen 120 bzw. 220 an den behälterseitigen Enden der Abluftleitungen 117 bzw. 217 erhalten werden, die Durchsätze an Trocknungsluft durch die Behälter 101 und 201 sowie das Mischungsverhältnis der von der Oberseite des ersten Behälters 101 zur Unterseite des zweiten Behälters 201 übergeführten Luft mit der von außen zur Unterseite des zweiten Behälters 201 geführten Frischluft optimal auf die Durchsatzmengen des Klärschlamms in den beiden Behältern einzustellen.

Der über den Trogkettenförderer 102 und den Beschickungsförderer 108 zur Oberseite der Einrichtung geförderte mechanisch vorentwässerte Klärschlamm kann mittels des gemeinsamen Schneckenförderers 300 wahlweise zuerst dem ersten Behälter 101 oder dem zweiten Behälter 201 zugeführt werden, je nach Antriebsrichtung des gemeinsamen Schneckenförderers 300. Entsprechend können die beiden Verteilereinrichtungen 104 und 204 und die gemeinsame Austragfördereinrichtung 311 wahlweise so betrieben werden, daß entweder der von der Unterseite des ersten Behälters 101 entnommene Klärschlamm oder der von der Unterseite des zweiten Behälters 201 entnommene Klärschlamm über den Fallstutzen 106 dem Beschickungsförderer 108 und von dort über den gemeinsamen Schneckenförderer 300 wahlweise dem ersten oder dem zweiten Behälter zugeführt wird. Auf diese Weise ist es möglich, den Klärschlamm zuerst dem ersten Behälter 101 und nach dem Durchwandern der Klärschlammsäule 123 von dort dem zweiten Behälter 201 zuzuführen und nach dem Durchlaufen der Klärschlammsäule 223 in dem zweiten Behälter an die Umgebung abzugeben, wobei wahlweise ein Teil des von der Unterseite des ersten oder zweiten Behälters entnommenen Klärschlamms dem ersten Behälter an dessen Oberseite wieder zugeführt werden kann. In diesem Falle wird also der zunächst lediglich mechanisch vorentwässerte Schlamm in dem ersten Behälter 101 bis zu einem gewissen Grad vorgetrocknet und von dort an den zweiten Behälter 201 übergeführt, so daß jede der Klärschlammsäulen in den Behältern für sich zwar von der Trocknungsluft im Gegenstrom durchströmt wird, jedoch bezüglich des von dem ersten Behälter zum zweiten Behälter übergeführten Klärschlamms eine Art Gleichstrom mit der von dem ersten Behälter zum zweiten Behälter übergeführten Trocknungsluft stattfindet. Dies hat zur Folge, daß die Trocknung in dem zweiten Behälter 201 wegen der Zufuhr der Abluft aus dem ersten Behälter 101 bei verhältnismäßig niedrigem Sauerstoffgehalt abläuft.

Demgegenüber ist es auch möglich, die Einrichtung so zu betreiben, daß der lediglich mechanisch vorentwässerte Klärschlamm zuerst der Oberseite des zweiten Behälters 201 und nach Durchlaufen der Klärschlammsäule 223 von dessen Unterseite zur Oberseite des ersten Behälters 101 geführt und dann von der Unterseite des ersten Behälters 101 nach außen entnommen wird. In diesem Falle wird der Klärschlamm von der Trocknungsluft sowohl in jedem der beiden Behälter als auch hinsichtlich der von dem zweiten Behälter 201 zu dem ersten Behälter 101 übergeführten Klärschlammenge im Gegenstrom durchströmt, so daß nun bei der Vortrocknung in dem zweiten Behälter 201 ein verhältnismäßig niedriger Sauerstoffgehalt herrscht, wogegen bei der endgültigen Trocknung in dem ersten Behälter 101 ein verhältnismäßig hoher Sauerstoffgehalt vorzufinden ist.

Durch die Wahl der Reihenfolge, in der die Behälter von dem zu trocknenden Klärschlamm durchlaufen werden, und die Einstellung der jeweiligen Mischungsverhältnisse, unter dem der jeweils an der Unterseite des einen oder anderen Behälters entnommene Klärschlamm der Oberseite desselben oder des anderen Behälters zugeführt wird, sowie die Einstellung der Strömungsdurchsätze und Mischungsverhältnisse der die jeweiligen Behälter durchlaufenden Trocknungsluft ist es möglich, den Trocknungsprozeß so zu gestalten, daß er optimal an die Art und den Feuchtegehalt des zu trocknenden Klärschlamms, an die gewünschte Restfeuchte und Beschaffenheit des getrockneten Klärschlamms und die gewünschte Gesamtdurchsatzgeschwindigkeit beim Trocknen angepaßt ist.

## Patentansprüche

1. Verfahren zum Trocknen von Klärschlamm, bei dem der Klärschlamm in einem Behälter von unten mit Trocknungsluft durchströmt wird, bei welchem
der feuchte Klärschlamm dem Behälter an dessen Oberseite kontinuierlich oder intermittierend zugeführt wird,
der Klärschlamm in Form einer Säule mit stabiler Schichtung von oben nach unten durch den Behälter geführt wird,
der getrocknete Klärschlamm dem Behälter von der Unterseite der Klärschlammsäule kontinuierlich oder intermittierend entnommen wird, und
die Trocknungsluft im Gegenstrom von unten nach oben durch die Klärschlammsäule geführt wird.

2. Verfahren nach Anspruch 1, dadurch gekennzeichnet, daß dem feuchten Klärschlamm vor der Zuführung zum Behälter ein Teil des dem Behälter entnommenen getrockneten Klärschlamms beigemischt wird.

3. Verfahren nach Anspruch 1 oder 2, dadurch gekennzeichnet, daß die Trocknungsluft mit einer solchen Geschwindigkeit durch die Klärschlammsäule geführt wird, daß die Luft nach dem Durchströmen des Klärschlamms im wesentlichen mit Feuchtigkeit gesättigt ist.

4. Verfahren nach Anspruch 1 oder 2, dadurch gekennzeichnet, daß der Durchsatz der Trocknungsluft durch die Klärschlammsäule das 5- bis 15fache des Volumens der Klärschlammsäule pro Stunde beträgt.

5. Verfahren nach Anspruch 4, dadurch gekennzeichnet, daß der Luftdurchsatz das 8- bis 10fache des Volumens der Klärschlammsäule pro Stunde beträgt.

6. Verfahren nach einem der Ansprüche 1 bis 5, dadurch gekennzeichnet, daß die Geschwindigkeit der Zuführung des feuchten Klärschlamms und die Geschwindigkeit der Entnahme des getrockneten Klärschlamms jeweils so gewählt werden, daß die Klärschlammsäule den Behälter innerhalb von 5 bis 15 Tagen durchläuft.

7. Verfahren nach Anspruch 6, dadurch gekennzeichnet, daß die Klärschlammsäule den Behälter innerhalb von 7 bis 10 Tagen durchläuft.

8. Verfahren nach einem der Ansprüche 3 bis 7, dadurch gekennzeichnet, daß der Luftdurchsatz und die Geschwindigkeit, mit der die Klärschlammsäule den Behälter durchläuft, so aufeinander abgestimmt sind, daß sich die Klärschlammsäule aufgrund der bei einem Restfäuleprozeß frei werdenden Wärme auf eine Temperatur von 60 bis 85°C erwärmt.

9. Verfahren nach Anspruch 8, dadurch gekennzeichnet, daß die Temperatur etwa 80°C beträgt.

10. Verfahren nach einem der Ansprüche 1 bis 9, dadurch gekennzeichnet, daß von der nach dem Durchströmen der Klärschlammsäule aus dem Behälter abgeführten Luft Wärme an die dem Behälter zuzuführende Trocknungsluft übertragen wird.

11. Verfahren nach Anspruch 10, dadurch gekennzeichnet, daß zur Erwärmung der dem Behälter zuzuführenden Trocknungsluft die Kondensationswärme der den Behälter verlassenden befeuchteten Luft verwendet wird.

12. Verfahren nach einem der Ansprüche 1 bis 11, dadurch gekennzeichnet, daß die Geschwindigkeit, mit der die Trocknungsluft durch den Behälter geführt wird, in Abhängigkeit vom CO₂-Gehalt und/oder der Temperatur und/oder der Feuchte der den Behälter verlassenden Luft eingestellt wird.

13. Verfahren nach einem der Ansprüche 1 bis 12, dadurch gekennzeichnet, daß der dem Behälter von der Unterseite der Klärschlammsäule entnommene Klärschlamm einem weiteren von seiner Unterseite her mit Trocknungsluft durchströmten Behälter an dessen Oberseite kontinuierlich oder intermittierend zugeführt, in Form einer Säule mit stabiler Schichtung von oben nach unten durch den weiteren Behälter geführt und dabei einer weiteren Trocknung unterzogen und dem weiteren Behälter von der Unterseite der Klärschlammsäule kontinuierlich oder intermittierend entnommen wird, wobei die Trocknungsluft im Gegenstrom von unten nach oben durch die Klärschlammsäule in dem weiteren Behälter geführt wird, und daß zumindest ein Teil der einem der Behälter an seiner Oberseite entnommenen Trocknungsluft zumindest als ein Teil der Trocknungsluft dem anderen Behälter an dessen Unterseite zugeführt wird.

14. Verfahren nach Anspruch 13, dadurch gekennzeichnet, daß die dem einen Behälter entnommene Trocknungsluft vor der Zuführung zum anderen Behälter entfeuchtet wird.

15. Verfahren nach Anspruch 13 oder 14, dadurch gekennzeichnet, daß die dem einen Behälter an dessen Oberseite entnommene Trocknungsluft dem anderen Behälter an dessen Unterseite zugeführt wird.

16. Verfahren nach Anspruch 13 oder 14, dadurch gekennzeichnet, daß die dem anderen Behälter an dessen Oberseite entnommene Trocknungsluft dem einen Behälter an dessen Unterseite zugeführt wird.

17. Verfahren nach Anspruch 15, dadurch gekennzeichnet, daß dem anderen Behälter zusätzlich Trocknungsluft aus der Umgebung zugeführt wird.

18. Verfahren nach Anspruch 16, dadurch gekennzeichnet, daß dem einen Behälter zusätzlich Trocknungsluft aus der Umgebung zugeführt wird.

19. Verfahren nach einem der Ansprüche 13 bis 18, dadurch gekennzeichnet, daß dem feuchten Klärschlamm vor der Zuführung zu dem einen Behälter ein Teil des dem anderen Behälter entnommenen getrockneten Klärschlamms beigemischt wird.

20. Verfahren nach einem der Ansprüche 13 bis 19, dadurch gekennzeichnet, daß dem von dem einen Behälter entnommenen Klärschlamm vor der Zuführung zu dem anderen Behälter ein Teil des dem anderen Behälter entnommenen getrockneten Klärschlamms beigemischt wird.

## Claims

1. Process for drying sewage sludge, in which drying air flows from below through the sewage sludge in a vessel, wherein
the moist sewage sludge is fed continuously or intermittently to the top of the vessel,
the sewage sludge is passed in the form of a column of stable layer structure downwards through the vessel,
the dried sewage sludge is discharged from the vessel continuously or intermittently from the underside of the sewage sludge column, and
the drying air is passed upwards through the sewage sludge column in countercurrent.

2. Process according to Claim 1, characterized in that a part of the dried sewage sludge discharged from the vessel is admixed to the moist sewage sludge before feeding to the vessel.

3. Process according to Claim 1 or 2, characterized in that the drying air is passed through the sewage sludge column at SuCu velocity that, after flowing through the sewage sludge, the air is substantially saturated with moisture.

4. Process according to Claim 1 or 2, characterized in that the throughput of drying air through the sewage sludge column is 5 to 15 times the volume of the sewage sludge column per hour.

5. Process according to Claim 4, characterized in that the air throughput is 8 to 10 times the volume of the sewage sludge column per hour.

6. Process according to one of Claims 1 to 5, characterized in that the rate of feeding the moist sewage sludge and the rate of discharge of the dried sewage sludge are each selected such that the sewage sludge column passes through the vessel within 5 to 15 days.

7. Process according to Claim 6, characterized in that the sewage sludge column passes through the vessel in 7 to 10 days.

8. Process according to one of Claims 3 to 7, characterized in that the air throughput and the rate at which the sewage sludge column passes through the vessel are mutually matched such that the sewage sludge column warms up to a temperature of 60 to 85°C owing to the heat released during a residual digestion process.

9. Process according to Claim 8, characterized in that the temperature is about 80°C.

10. Process according to one of Claims 1 to 9, characterized in that heat is transferred from the air discharged from the vessel after flowing through the sewage sludge column to the drying air to be fed to the vessel.

11. Process according to Claim 10, characterized in that the heat of condensation of the moisture-laden air leaving the vessel is utilized for heating the drying air to be fed to the vessel.

12. Process according to one of Claims 1 to 11, characterized in that the rate at which the drying air is passed through the vessel is adjusted as a function of the CO₂ content and/or the temperature and/or the moisture content of the air leaving the vessel.

13. Process according to one of Claims 1 to 12, characterized in that the sewage sludge discharged from the vessel from the underside of the sewage sludge column is continuously or intermittently fed to the top of a further vessel, through which drying air flows from its bottom, in the form of a column of stable layer structure passed downwards through the further vessel and thus subjected to further drying and discharged from the further vessel continuously or intermittently from the underside of the sewage sludge column, the drying air being passed upwards through the sewage sludge column in the further vessel in countercurrent, and in that at least a part of the drying air discharged from the top of one of the vessels is fed as at least a part of the drying air to the bottom of the other vessel.

14. Process according to Claim 13, characterized in that the drying air discharged from one vessel is dehumidified before it is fed to the other vessel.

15. Process according to Claim 13 or 14, characterized in that the drying air discharged from the top of one vessel is fed to the bottom of the other vessel.

16. Process according to Claim 13 or 14, characterized in that the drying air discharged from the top of the other vessel is fed to the bottom of the first vessel.

17. Process according to Claim 15, characterized in that drying air from the surroundings is additionally fed to the other vessel.

18. Process according to Claim 16, characterized in that drying air from the surroundings is additionally fed to the first vessel.

19. Process according to one of Claims 13 to 18, characterized in that a part of the dried sewage sludge discharged from the other vessel is admixed to the moist sewage sludge before it is fed to the first vessel.

20. Process according to one of Claims 13 to 19, characterized in that a part of the dried sewage sludge discharged from the other vessel is admixed to the sewage sludge discharged from the first vessel before it is fed to the other vessel.

## Revendications

1. Procédé de séchage de boues de décantation dans lequel les boues de décantation sont traversées dans un conteneur depuis le bas par de l'air de séchage, dans lequel les boues de décantation humides sont acheminées au conteneur au côté supérieur de celui-ci de façon continue ou par intermittance, les boues de décantation sont guidées sous forme de colonne en une disposition par couches stable depuis le haut vers le bas à travers le conteneur, les boues de décantation séchées sont retirées du conteneur depuis le côté inférieur de la colonne en boues de décantation de façon continue ou par intermittance, et l'air de séchage est guidé suivant un contre-courant depuis le bas vers le haut à travers la colonne en boues de décantation.

2. Procédé selon la revendication 1, caractérisé en ce qu'on ajoute aux boues de décantation humides avant l'acheminement au conteneur une partie des boues de décantation séchées retirées du conteneur.

3. Procédé selon la revendication 1 ou 2, caractérisé en ce que l'air de séchage est guidé à travers la colonne en boues de décantation à une vitesse telle que l'air, après le passage à travers les boues de décantation, soit saturé sensiblement en humidité.

4. Procédé selon la revendication 1 ou 2, caractérisé en ce que le débit de l'air de séchage à travers la colonne en boues de décantation représente 5 à 15 fois le volume de la colonne en boue de décantation par heure.

5. Procédé selon la revendication 4, caractérisé en ce que le débit d'air représente 8 à 10 fois le volume de la colonne en boues de décantation par heure.

6. Procédé selon l'une des revendications 1 à 5, caractérisé en ce que la vitesse de l'amenée des boues de décantation humides et la vitesse du retrait des boues de décantation séchées sont choisies respectivement de façon que la colonne en boues de décantation traverse le conteneur en 5 à 15 jours.

7. Procédé selon la revendication 6, caractérisé en ce que la colonne en boues de décantation traverse le conteneur en 7 à 10 jours.

8. Procédé selon l'une des revendications 3 à 7, caractérisé en ce que le débit d'air et la vitesse avec laquelle la colonne en boues de décantation traverse le conteneur sont accordés l'un à l'autre de façon que la colonne en boues de décantation, du fait de la chaleur se dégageant lors d'un processus résiduel de putréfaction, soit chauffée à une température comprise entre 60 et 85°C.

9. Procédé selon la revendication 8, caractérisé en ce que la température est environ de 80°C.

10. Procédé selon l'une des revendications 1 à 9, caractérisé en ce que l'air évacué du conteneur après le passage à travers la colonne en boues de décantation transmet de la chaleur à l'air de séchage devant être amené au conteneur.

11. Procédé selon la revendication 10, caractérisé en ce qu'on utilise pour chauffer l'air de séchage à amener au conteneur la chaleur de condensation de l'air humidifié quittant le conteneur.

12. Procédé selon l'une des revendications 1 à 11, caractérisé en ce que la vitesse à laquelle on fait passer l'air de séchage à travers le conteneur, est réglée en fonction de la teneur en CO₂ et/ou de la température et/ou de l'humidité de l'air quittant le conteneur.

13. Procédé selon l'une des revendications 1 à 12, caractérisé en ce que les boues de décantation retirées du conteneur depuis le côté inférieur de la colonne en boues de décantation sont amenées vers un autre conteneur traversé depuis son côté inférieur par de l'air de séchage à son côté supérieur de façon continue ou par intermittance, sont amenées sous forme d'une colonne avec une disposition par couches stable depuis le haut vers le bas à travers l'autre conteneur et, ce faisant, sont soumises à un séchage ultérieur, et sont retirées du conteneur additionnel depuis le côté inférieur de la colonne en boues de décantation de façon continue ou par intermittance, l'air de séchage étant guidé suivant un contre-courant depuis le bas vers le haut à travers la colonne en boues de décantation dans le conteneur additionnel, et qu'au moins une partie de l'air de séchage prélevé à l'un des conteneurs à son côté supérieur est amenée au moins comme une partie de l'air de séchage à l'autre conteneur au côté inférieur de celui-ci.

14. Procédé selon la revendication 13, caractérisé en ce que l'air de séchage retiré d'un conteneur est déshumidifié avant l'amenée à l'autre conteneur.

15. Procédé selon la revendication 13 ou 14, caractérisé en ce que l'air de séchage prélevé d'un conteneur au côté supérieur de celui-ci est amené à l'autre conteneur au côté inférieur de celui-ci.

16. Procédé selon la revendication 13 ou 14, caractérisé en ce que l'air de séchage prélevé de l'autre conteneur à son côté supérieur est amené au conteneur au côté inférieur de celui-ci.

17. Procédé selon la revendication 15, caractérisé en ce qu'on fait parvenir à l'autre conteneur additionnellement de l'air de séchage depuis l'air environnant.

18. Procédé selon la revendication 16, caractérisé en ce qu'on fait parvenir à un conteneur additionnellement de l'air de séchage depuis l'air environnant.

19. Procédé selon l'une des revendications 13 à 18, caractérisé en ce qu'on mélange aux boues de décantation humides avant l'amenée vers un conteneur une partie des boues de décantation séchées prélevées de l'autre conteneur.

20. Procédé selon l'une des revendications 13 à 19, caractérisé en ce qu'on mélange aux boues de décantation prélevées d'un conteneur avant l'amenée vers l'autre conteneur une partie des boues de décantation séchées prélevées de l'autre conteneur.
